# EUROPÄISCHE PATENTANMELDUNG

(11) **EP 1 722 326 A1**
(43) Veröffentlichungstag der Anmeldung: **15.11.2006**
(21) Anmeldenummer: 05009595.9
(22) Anmeldetag: 02.05.2005
(51) Int. Cl.: G06Q 40/00

(54) **Datenverarbeitungsverfahren zur zeitlich optimalen Berechnung großer Ergebnisdatensätze**

(71) Anmelder: UBS AG, 8001 Zürich (CH)
(72) Erfinder: Wietlisbach, Markus, 8125 Zollikerberg (CH); Loacker, Hansbeat, Dr., 8132 Egg (CH)
(74) Vertreter: Jehle, Volker Armin

(57) **Zusammenfassung**

Die Erfindung betrifft ein Datenverarbeitungsverfahren zur zeitlich optimierten Berechnung einer großen Anzahl von Ergebnisdatensätzen an einem Zeitabschnittsende, wobei der Berechnung Daten zu Grunde gelegt werden.

Dieses ist zur optimalen Nutzung der Rechenkapazität des verwendeten Computersystems dadurch verbessert, dass es mindestens folgende Schritte aufweist:
(1) Festlegen einer Zeitspanne 10, für die die zu Grunde gelegten Daten berücksichtigt werden sollen,
(2) Ermitteln der Wahrscheinlichkeit für jeden Ergebnisdatensatz, dass die der Berechnung des jeweiligen Ergebnisdatensatzes zu Grunde gelegten Daten in der Zeit zwischen der Berechnung des Ergebnisdatensatzes und dem Zeitabschnittsende 9 verändert werden,
(3) Berechnen der Ergebnisdatensätze innerhalb der Zeitspanne 10, wobei diejenigen Ergebnisdatensätze, bei denen die der Berechnung zu Grunde liegenden Daten eine geringere Wahrscheinlichkeit einer Änderung aufweisen, zeitlich vor denjenigen Ergebnisdatensätzen berechnet werden, bei denen die der Berechnung zu Grunde liegenden Daten eine höhere Wahrscheinlichkeit einer Änderung aufweisen,
(4) Speichern der Ergebnisdatensätze,
(5) Feststellen für jeden Ergebnisdatensatz kurz vor dem Zeitabschnittsende 9, ob die der Berechnung des Ergebnisdatensatzes zu Grunde liegenden Daten nach der Berechnung des Ergebnisdatensatzes verändert wurden, und gegebenenfalls Berechnung einer Korrektur, insbesondere Durchführen einer Neuberechnung für den jeweiligen Ergebnisdatensatz.

## Beschreibung

Die Erfindung betrifft ein Datenverarbeitungsverfahren zur zeitlich optimierten Berechnung einer großen Anzahl von Ergebnisdatensätzen an einem Zeitabschnittsende.

Aus dem Stand der Technik ist bekannt, dass zu bestimmten Tageszeiten auf Großrechnersystemen großer Unternehmen regelmäßig große Mengen von Daten zu verarbeiten sind. Solche regelmäßig in großen Mengen anfallenden Daten entstehen beispielsweise dann, wenn im Laufe eines Geschäftstages die Daten zu den getätigten Geschäften gesammelt wurden. Am Ende eines Geschäftstages werden diese Daten in einer so genannten Tagesendverarbeitung verarbeitet.

Die bei den einzelnen Geschäftsvorgängen entstehenden Informationen werden in den Feldern von Datensätzen erfasst, die in Dateien gespeichert werden.

Die Verarbeitung einer solchen Datei kann beispielsweise die Durchführung der für den Geschäftsvorgang notwendigen Buchungsvorgänge oder die Pflege eines Datenbestandes sein, die von einem weiteren System zu verarbeiten sind. Die Verarbeitung findet dabei üblicherweise nicht oder nicht ausschließlich auf den Rechnern statt, auf denen die Daten gesammelt werden und die Dateien entstehen. Stattdessen werden die Dateien zur Verarbeitung auf einen zentralen Rechner transferiert, auf dem die in vielen gleichartigen Systemen entstandenen Dateien gesammelt und zentral verarbeitet werden. In diesen Zentralsystemen werden auch die entsprechenden Konten der an einem Geschäftsvorgang beteiligten Parteien geführt, so dass in dem Zentralsystem alle zu den Geschäftsvorgängen zugehörigen Daten zu einem zentralen Punkt zusammengeführt werden.

Häufig besteht die Notwendigkeit, die im Laufe eines Geschäftstages gesammelten Datensätze innerhalb eines vorgegebenen Zeitfensters zu verarbeiten, um sicherzustellen, dass beispielsweise bestimmte Buchungsvorgänge am selben Geschäftstag abgeschlossen werden. Die Dateien werden daher so zeitig zu dem zentralen Rechner transferiert und dort verarbeitet, so dass eine Verarbeitung der Dateien am gleichen Tage sichergestellt ist. Dies führt dazu, dass die Daten erst am Ende eines Tages zu dem Zentralsystem transferiert werden und dieses die Daten bis zum Ende des Tages verarbeiten muss. Dabei umfasst die Verarbeitung beispielsweise das Erfassen von Geschäftsvorgängen als Buchungsvorgang auf einem Konto oder das Erfassen einer Transaktion auf einem Konto, so dass für ein Konto eine oder mehrere Transaktionen erfasst werden müssen.

Weiterhin ist bekannt, dass auf solchen Großrechnersystem am Ende bestimmter Zeitabschnitte, beispielsweise am Ende einer Monats, Quartals oder eines Jahres bestimmte Endverarbeitungen durchzuführen sind, um beispielsweise Abschlüsse für den gerade ablaufenden Zeitraum zu erstellen. So ist beispielsweise für normale Girokonten am Ende eines Monats ein Monatsabschluss durchzuführen, am Ende Quartals sind Quartalsabschlüsse zu erstellen und am Jahresende ist zusätzlich beispielsweise für die Sparkonten der jeweilige Jahresabschluss durchzuführen, bei dem beispielsweise die Zinsen für das ablaufende Jahr berechnet und auf dem Konto verbucht werden. Dazu werden auf dem Großrechnersystem dafür vorgesehene Softwaremodule gestartet. Diese berechnen beispielsweise zunächst das mittlere Guthaben eines Sparkontos für den ablaufenden Zeitabschnitt, um abhängig davon die fälligen Gebühren festzulegen. Anhand der Zinsnummem werden die Zinsen für den gegebenen Zeitabschnitt berechnet. Ebenso ermittelt ein weiteres Softwaremodul beispielsweise die Kontoführungsgebühren für denselben Zeitabschnitt. Die so ermittelten Werte werden dann als Transaktionen zu dem jeweiligen Konto verbucht. Diese Transaktionen werden somit nicht als Geschäftsvorgang im Rahmen des Tagesgeschäfts an das Großrechnersystem von außen geliefert, sondern auf dem Großrechner selbst von dort ablaufenden Softwaremodulen generiert. Die Verbuchung dieser vom Großrechnersystem selbst generierten Transaktionen ist jedoch identisch zu der Verbuchung der von außen an das System gelieferten Transaktionen und wird von denselben Softwaremodulen durchgeführt.

Am Ende eines solchen Zeitabschnitts ist somit zum Einen die täglich anfallende Menge von Daten zu verarbeiten, die in einer so genannten Tagesendverarbeitung erfolgt, zum Anderen sind die zu dem jeweiligen Zeitabschnittsende geforderten Abschlüsse von Konten und dergleichen zu erstellen, die als Monats- oder Quartals- oder Jahresendverarbeitung bezeichnet werden.

Bei der Tagesendverarbeitung und der Monats-, Quartals- oder Jahresendverarbeitung ist zu beachten, dass diese nicht unabhängig voneinander durchgeführt werden können. Alle Ergebnisse, also Buchungen und Transaktionen, die an dem letzten Tage des jeweiligen Zeitabschnitts stattgefunden haben sind nicht nur an diesem Tage in der Tagesendverarbeitung, sondern auch für die Endverarbeitung für den gerade ablaufenden Zeitabschnitt zu berücksichtigen, da die Geschäftsvorgänge nicht nur zu diesem Tage, sondern ebenso zu dem Zeitabschnitt gehören. Folglich kann die Monats-, Quartals- oder Jahresendverarbeitung erst dann stattfinden, wenn die Tagesendverarbeitung der jeweils vorangehenden Tage abgeschlossen ist.

Falls die Monats-, Quartals- oder Jahresendverarbeitung vor dem Ende der Tagesendverarbeitung beginnt, so besteht die Gefahr, dass beispielsweise ein Geschäftsvorgang zu einem Konto erst nach der Berechnung der Monats-, Quartals oder Jahresendvearbeitung zu diesem Konto gebucht wird und damit in dieser nicht berücksichtigt ist. Die Ergebnisse Monats-, Quartals- oder Jahresendverarbeitung wären somit unrichtig.

Um sicherzustellen, dass nun alle Geschäftsvorgänge eines Tages nicht nur in der Tagesend-, sondern auch in der Monats-, Quartals- oder Jahresendverarbeitung berücksichtigt sind, könnte man die Monats-, Quartals- oder Jahresendverarbeitung erst dann starten, wenn die Tagesendverarbeitung abgeschlossen ist.

Dies könnte dazu führen, dass die Monats-, Quartals- oder Jahresendverarbeitung erst kurz vor dem Ende des letzten Tages des ablaufenden Zeitabschnitts begonnen wird und damit wegen der großen Datenmenge nicht vor dem Tagesende und damit rechtzeitig abgeschlossen werden kann. Hier besteht jedoch die Forderung, dass ein Monats-, Quartals- oder Jahresabschluss beispielsweise eines Kontos zum Ende des jeweiligen Zeitabschnitts abgeschlossen sein muss.

Die Aufgabe der Erfindung besteht nun darin, ein Verfahren bereitzustellen, das die rechtzeitige Erstellung der am Ende eines solchen Zeitabschnitts geforderten Abschlüsse unter Berücksichtigung aller Geschäftsvorgänge des Zeitabschnitts ermöglicht.

Bei einem Datenverarbeitungsverfahren zur zeitlich optimierten Berechnung einer großen Anzahl von Ergebnisdatensätzen an einem Zeitabschnittsende, wobei der Berechnung Daten zu Grunde gelegt werden, die vor dem Zeitabschnittsende veränderbar sind, wird die Aufgabe nun dadurch gelöst, dass das Datenverarbeitungsverfahren mindestens folgende Schritte aufweist:
(1) Festlegen einer Zeitspanne, für die die zu Grunde gelegten Daten berücksichtigt werden sollen,
(2) Ermitteln der Wahrscheinlichkeit für jeden Ergebnisdatensatz, dass die der Berechnung des jeweiligen Ergebnisdatensatzes zu Grunde gelegten Daten in der Zeit zwischen der Berechnung des Ergebnisdatensatzes und dem Zeitabschnittsende verändert werden,
(3) Berechnen der Ergebnisdatensätze innerhalb der Zeitspanne, wobei diejenigen Ergebnisdatensätze, bei denen die der Berechnung zu Grunde liegenden Daten eine geringere Wahrscheinlichkeit einer Änderung aufweisen, zeitlich vor denjenigen Ergebnisdatensätzen berechnet werden, bei denen die der Berechnung zu Grunde liegenden Daten eine höhere Wahrscheinlichkeit einer Änderung aufweisen,
(4) Speichern der Ergebnisdatensätze,
(5) Feststellen für jeden Ergebnisdatensatz kurz vor dem Zeitabschnittsende, ob die der Berechnung des Ergebnisdatensatzes zu Grunde liegenden Daten nach der Berechnung des Ergebnisdatensatzes verändert wurden, und gegebenenfalls Berechnung einer Korrektur, insbesondere Durchführen einer Neuberechnung, für den jeweiligen Ergebnisdatensatz.

Zu Beginn des Verfahrens kann die zur Durchführung der nachfolgenden Verfahrensschritte notwendige Zeitspanne festegelegt werden. Diese dient zum Einen dazu, den Startzeitpunkt für die Berechnung der Ergebnisdatensätze festzulegen. Zum Anderen gibt sie die im nächsten Verfahrensschritt maximal zu betrachtenden Zeit vor. Die ermittelte Zeitspanne ist im Vergleich zu dem ablaufenden Zeitabschnitt erfahrungsgemäß kurz und endet zeitgleich mit diesem. Typischerweise hat eine solche Zeitspanne die Länge einiger Tage und wird mit Hilfe von Erfahrungswerten abgeschätzt.

In dem zweiten Verfahrensschritt wird eine Wahrscheinlichkeit dafür ermittelt, dass die der Berechnung eines Ergebnisdatensatzes zu Grunde zu legenden Daten eine Änderung innerhalb der Zeit zwischen der Berechnung eines Ergebnisdatensatzes und dem Zeitabschnittsende erfahren. Somit wird für jeden Ergebnisdatensatz ermittelt, ob sich die jeweils bei der Berechnung zu berücksichtigenden Daten mit hoher oder geringer Wahrscheinlichkeit nach der Berechnung des Ergebnisdatensatzes ändern werden. Die Wahrscheinlichkeit ist dabei in hohem Maße von der Art der zu Grunde zu legenden Daten selbst abhängig und wird in der Praxis häufig anhand von Erfahrungswerten abzuschätzen sein.

In dem dritten Schritt werden die Ergebnisdatensätze durch Verarbeitung der Daten berechnet. Dabei beginnt die Verarbeitung mit dem Beginn der Zeitspanne und endet kurz vor dem Ende der Zeitspanne. Zum Zeitpunkt der Berechnung des Ergebnisdatensatzes werden alle für diesen Ergebnisdatensatz vorhandenen Daten berücksichtigt. Der Ergebnisdatensatz bleibt damit solange korrekt, wie die der Berechnung zu Grunde gelegten Daten unverändert bleiben. Die in dem ersten Verfahrensschritt ermittelte Wahrscheinlichkeit einer Änderung der Daten nach dem Zeitpunkt der Bearbeitung gibt somit auch die Wahrscheinlichkeit an, mit der der Ergebnisdatensatz bis zum Zeitabschnittsende korrekt bleibt. Erst wenn die der Berechnung des Ergebnisdatensatzes zu Grunde gelegten Daten verändert werden, also insbesondere neue zu berücksichtigende Daten nach der Berechnung des Ergebnisdatensatzes hinzukommen, wird der Ergebnisdatensatz falsch.

Bei der Berechnung der Ergebnisdatensätze werden diejenigen zuerst berechnet, die mit hoher Wahrscheinlichkeit bis zum Erreichen des Zeitabschnittsendes korrekt bleiben, das heisst, für deren zu Grunde liegende Daten eine geringe Wahrscheinlichkeit einer Änderung ermittelt wurde. Ergebnisdatensätze, denen bei der Berechnung Daten zu Grunde zu legen sind, für die eine hohe Wahrscheinlichkeit einer Änderung nach dem Zeitpunkt der Berechnung des Ergebnisdatensatzes ermittelt wurde, werden entsprechend später, also mit einem geringeren zeitlichen Abstand zu dem Zeitabschnittsende berechnet, so dass auch diese Ergebnisdatensätze mit großer Wahrscheinlichkeit nicht korrigiert werden müssen.

In dem vierten Verfahrensschritt werden die so vor dem Zeitabschnittsende ermittelten Ergebnisdatensätze gespeichert.

Der fünfte Verfahrensschritt wird möglichst zeitnah zu dem Zeitabschnittsende durchgeführt. In diesem Verfahrensschritt wird geprüft, ob die der Berechnung eines Ergebnisdatensatzes zu Grunde gelegten Daten seit der Berechnung des Ergebnisdatensatzes verändert wurden. Eine solche Veränderung kann eine Änderung einzelner bereits bei der Berechnung eines Ergebnisdatensatzes berücksichtigter Daten sein oder es können neue Daten hinzugekommen sein. Wird eine solche Veränderung der zu Grunde gelegten Daten festgestellt, so ist der ursprünglich berechnete Ergebnisdatensatz nicht mehr korrekt und es erfolgt eine Korrektur, insbesondere die Durchführung einer Neuberechnung, mit der die Veränderung der Daten berücksichtigt wird.

Das erfindungsgemäße Datenverarbeitungsverfahren ermöglicht damit die Entzerrung der Berechnung der an einem Zeitabschnittsende auftretenden großen Anzahl an Ergebnisdatensätzen, wobei gleichzeitig sichergestellt ist, dass die Ergebnisdatensätze zum Ende des Zeitabschnitts auf den dann aktuellen Daten basieren.

Es gibt nun mehrere Möglichkeiten, das erfindungsgemäße Verfahren in vorteilhafter Art und Weise auszugestalten und weiterzubilden. Hierzu wird zunächst auf die dem Patentanspruch 1 nachgeordneten Patentansprüche verwiesen. Im Folgenden werden nun mehrere bevorzugte Ausgestaltungen anhand einer Anwendung aus dem Bankenbereich beschrieben.

Es zeigen
- Figur 1:: einen Ausschnitt aus einer Bankanwendung
- Figur 2:: ein vereinfachtes Zeitdiagramm zur Berechnung der Ergebnisdatensätze

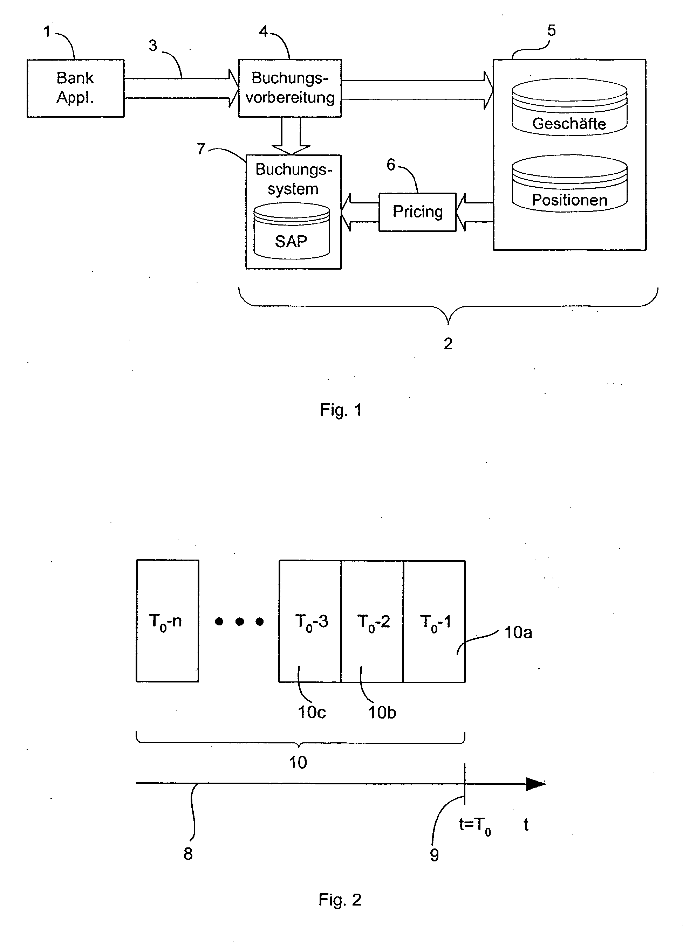

Figur 1 zeigt einen schematisch dargestellten Ausschnitt der Datenverarbeitung bei einer Bank. Diese Datenverarbeitung setzt sich zusammen aus der Verarbeitung der täglich von den Bankapplikationen 1 an einen Zentralrechner 2 gelieferten Daten, wobei der Datenfluss durch den Pfeil 3 symbolisiert ist. Diese Daten sind Informationen über die an diesem Geschäftstag durchgeführten Geschäftsvorgänge und können Informationen über Schaltergeschäfte, Börsengeschäfte, Vergütungsverkehr, an einem Geldautomaten durchgeführte Transaktionen oder per PC durchgeführte Telebanking-Transaktionen sein. All diese Informationen werden zunächst auf dem Zentralrechner 2 gesammelt und zunächst von einer so genannten Buchungsvorbereitung 4 verarbeitet. Anschließend werden die Daten von weiteren Softwaremodulen weiter verarbeitet, beispielsweise werden die Daten in einem hier nicht dargestellten so genannten Accounting-Feeder Prozess zur weiteren Verarbeitung durch die nachfolgenden Prozesse aufbereitet. In der weiteren Verarbeitung werden die Informationen zu den einzelnen durchgeführten Transaktionen beispielsweise in die Tabellen "Geschäfte/Transaktionen" 5 eingepflegt. Daran anschließend läuft das so genannte "Pricing" 6, welches die zu den einzelnen Transaktionen anfallenden Bankgebühren berechnet und als weitere Transaktion zur Buchung auf dem Konto bereitstellt. Der Abschluss per einem Zeitabschnittsende auf einem Konto kann erst dann erfolgen, wenn alle in diesem Zeitabschnitt anfallenden Buchungen inklusive der Pricing-Buchungen auf dem Konto verbucht sind. Dabei können die Pricing-Buchungen für den betreffenden Abschnitt ihrerseits wiederum abhängig von den im Zeitabschnitt anfallenden "normalen" Buchungen sein.

Die Verarbeitung der täglich an das Zentralsystem 2 gelieferten Daten kann erst am Abend erfolgen, wenn die Geschäftsvorgänge bzw. Transaktionen durchgeführt und die entsprechenden Daten an das zentrale Rechnersystem 2, auf dem die Konten zentral gepflegt werden, übermittelt sind. Für die Verarbeitung dieser Daten besteht die Vorgabe, diese am gleichen Tage zu buchen, respektive in die betreffenden Datenbanken "Geschäfte", "Positionen" einzupflegen. Zum Einen finden damit die jeweiligen Buchungen am gleichen Tage statt, damit alle Saldi am Folgetag aktuell sind, zum Anderen wird so auch die Ansammlung größerer Datenmengen verhindert, die in einer Kette zu einem Datenstau führen würde. Da bei der Verarbeitung auf Grund der bestehenden Abhängigkeiten zwischen den einzelnen Verarbeitungsschritten eine vorgegebene Reihenfolge einzuhalten ist und nur ein begrenztes Zeitfenster genutzt werden kann, ist die gesamte Verarbeitung der Daten eines Geschäftstages zeitkritisch.

Die Verarbeitung der Daten findet dabei in so genannten Jobs statt. In einem realen Beispielsfall einer Großbank werden so pro Nacht ca. eine Million dieser Jobs verarbeitet.

Zusätzlich zu den täglich zu verarbeitenden Daten fallen am Ende bestimmter Zeitabschnitte weitere Datenverarbeitungen an. So sind beispielsweise am Ende eines Monats, eines Quartals oder eines Jahres Abschlüsse für die Konten oder Sparbücher, die im Folgenden unter dem Begriff Konto zusammengefasst werden, zu berechnen. Gesetzlich ist vorgeschrieben, dass am Jahresende alle Kundenkonti abgeschlossen werden müssen.

Die Berechnung dieser Abschlüsse für die Konten findet zu einem Teil mit den Softwaremodulen statt, die bei der Verarbeitung der täglich an das Großrechnersystem 2 von den Bankapplikationen 1 transferierten Daten eingesetzt werden. So werden beispielsweise die am Ende eines Zeitabschnitts fälligen Bankgebühren für die Kontoführung von dem Pricing Softwaremodul 6 berechnet.

Für diese Abschlüsse gilt zum Einen die Vorgabe, dass die Berechnung zum Ende des Zeitabschnitts abgeschlossen sein muss, zum Anderen müssen bei der Berechnung des jeweiligen Abschlusses alle bis zum Ende des Zeitabschnitts für dieses Konto durchgeführten Transaktionen berücksichtigt werden. Folglich muss die Berechnung eines solchen Kontoabschlusses möglichst zeitnah an dem tatsächlichen Ende Zeitabschnitts stattfinden. Bei einer solchen Berechnung eines Abschlusses bestehen ebenso wie bei der Verarbeitung der täglich anfallenden Transaktionsdaten Abhängigkeiten zwischen den durchzuführenden Schritten einer solchen Berechnung. So sind beispielsweise die Höhe des zu verbuchenden Zinsbetrages zu einem Guthaben sowie die Kontoführungsgebühren zu berechnen, bevor diese als Transaktion zu dem Konto verbucht werden und anschlie-ßend das Gesamtguthaben am Ende des jeweiligen Zeitabschnitts berechnet wird.

Am Ende eines solchen Zeitabschnitts sind damit neben den täglich zu verarbeitenden Transaktionsdaten die Abschlussberechnungen der Konten durchzuführen, die im Folgenden als Ergebnisdatensätze bezeichnet werden

In dem Beispielsfall einer Großbank fallen am Jahresende durch die zu berechnenden Abschlüsse ca. 10 Millionen so genannter Jobs an, so dass die durch die Berechnung der Ergebnisdatensätze erzeugte Last die zehnfache Last einer Tagesendverarbeitung erreicht.

Zur Verarbeitung dieser Last innerhalb eines Tages wäre damit erheblich mehr Rechenleistung vorzuhalten, die nur am Ende eines Zeitabschnitts ausgelastet wäre, den weitaus größten Teil der Zeit jedoch ungenutzt bliebe. Dies wäre nicht ökonomisch. In der Praxis verschärft sich die Problematik jedoch auch dadurch, dass sowohl die für die Abschlüsse durchzuführenden Berechnungen wie auch die Verarbeitung der täglichen Daten die gleichen Konten betreffen und zum Teil von den Softwaremodulen durchzuführen sind, die auch im Rahmen einer Tagesendverarbeitung eingesetzt werden. Folglich kann die Berechnung der Abschlüsse nicht von der Bearbeitung der täglichen Daten losgelöst betrachtet werden.

Eine Entzerrung dieses Zeitproblems ist mit den Verfahrensschritten des vorgeschlagenen Datenverarbeitungsverfahrens möglich.

In dem ersten Verfahrensschritt wird festgelegt, welche Zeitspanne für die im Rahmen des ablaufenden Zeitabschnitts zu berechnenden Ergebnisdatensätze benötigt wird. Diese Zeitspanne endet mit dem Ende des ablaufenden Zeitabschnitts, da zu diesem Zeitpunkt die Kontoabschlüsse, also alle Ergebnisdatensätze, korrekt berechnet sein müssen. Da die Berechnung Kontoabschlüsse innerhalb des Zeitabschnitts erfolgen muss, kann durch die Länge der Zeitspanne der Zeitpunkt innerhalb des Zeitabschnitts bestimmt werden, an dem mit der Berechnung der Kontoabschlüsse zu beginnen ist. In der Praxis lässt sich diese Zeitspanne als Produkt aus der Anzahl der zu berechnenden Kontoabschlüsse und der für jede Berechnung notwendigen Zeit bestimmen, wobei die für die Berechnung eines Kontoabschluss notwendige Zeit ein Erfahrungs- oder Schätzwert ist.

Die Ermittlung der Wahrscheinlichkeit einer Änderung der den Berechnungen zu Grunde liegenden Daten im zweiten Verfahrensschritt basiert darauf, dass erfahrungsgemäß auf einem großen Anteil der Konten wenige Transaktionen stattfinden, wohingegen nur auf einem kleinen Anteil der Konten täglich Transaktionen zu verbuchen sind. So finden auf Sparkonten, von denen aus beispielsweise keine direkten Überweisungen auf andere Konten oder Börsengeschäfte möglich sind, und auf denen ein vergleichsweise kleines Guthaben liegt, sehr wenige Transaktionen statt. Mit steigendem Guthaben wird dagegen erfahrungsgemäß die Anzahl der Transaktionen zunehmen. Weiterhin ist bei Konten, die als so genannte Girokonten geführt werden, die jedoch nicht für den so genannten Vergütungsverkehr genutzt werden, eine etwas höhere Anzahl von Transaktionen zu erwarten, wobei hier noch unterschieden werden kann, ob zu einem Konto eine Kreditkarte ausgegeben wurde oder nicht. Sofern keine Kreditkarte zu einem Konto gehört, ist mit eher weniger Transaktionen zu rechnen. Die meisten am Ende eines Zeitabschnitts zu verbuchenden Kontobewegungen fallen erfahrungsgemäß bei Konten an, von denen aus Lohnzahlungen getätigt werden, da diese häufig am Monatsende ausbezahlt werden.

Es gibt somit eine Reihe von Kontenarten, die nicht zu Abwicklung des täglichen Zahlungsverkehrs genutzt werden und auf denen folglich wenig Bewegungen stattfinden. Weiterhin gibt es Konten, die zwar für eine Vielzahl von Transaktionen nutzbar wären, auf denen tatsächlich jedoch wenige Transaktionen stattfinden, weil die Konteninhaber die zur Verfügung stehenden Möglichkeiten nicht nutzen. Schließlich gibt es Konten, auf denen erfahrungsgemäß auch am Monatsende und damit am Ende eines Zeitabschnitts regelmäßig Transaktionen zu verbuchen sind.

Für einige Arten von Konten und für einige Gruppen von Konteninhabern ist damit die Wahrscheinlichkeit einer Änderung kurz vor dem Ende des Zeitabschnitts sehr gering, wohingegen für andere Konten mit sehr hoher Wahrscheinlichkeit Transaktionen auch am letzten Tag des Zeitabschnitts zu verbuchen sind:

Zur Ermittlung der Wahrscheinlichkeit, dass zu einem Konto nach der Berechnung des Abschlusses noch Transaktionen zu verbuchen sind und sich damit die der Berechnung des Ergebnisdatensatzes zu Grunde zu legenden Daten nach dem Zeitpunkt der Berechnung ändern, können damit zum Einen die beispielhaft erwähnten Kriterien herangezogen werden. Zum Anderen kann zu einem Konto auch die Statistik der Transaktionen in der Vergangenheit herangezogen und mathematisch exakt ausgewertet werden, so dass unabhängig von der Art des Kontos oder einer dazu ausgegebenen Kreditkarte die Wahrscheinlichkeit ermittelt werden kann.

Der zeitliche Ablauf des Verfahrens wird in Folgenden anhand der Figur 2 erläutert.

Das Ende eines Zeitabschnitts sei auf dem Zeitstrahl 8 der Zeitpunkt 9 t=T₀.

Da die Berechnung der Ergebnisdatensätze, also der Kontenabschlüsse, mit einigem Zeitabstand vor dem tatsächlichen Ende 8 des Zeitabschnitts, also t=T₀, durchgeführt werden muss, wird vorab die zur Berechnung aller Abschlüsse, also aller Ergebnisdatensätze, notwendige Zeitspanne 10 ermittelt, deren Ende mit dem Zeitabschnittsende 9 zusammenfällt. Die Länge der Zeitspanne sei hier n Tage. In der Praxis wird die Zeitspanne ein Schätzwert sein, in die die Größe des vorhandenen Datenbestands, die Statistik über die Dauer solcher Monats-, Quartals- oder Jahresendverarbeitungen in der Vergangenheit und ein Sicherheitsfaktor einfließen. Die Berechnung der Ergebnisdatensätze beginnt damit spätestens zu Beginn der Zeitspanne, also am Tag t = T₀ - n.

Anschließend wird für alle Konten, für die solche Ergebnisdatensätze zu berechnen sind, die jeweilige Wahrscheinlichkeit dafür ermittelt, dass sich die der Berechnung der Ergebnisdatensätze zu Grunde liegenden Daten in der Zeitspanne zwischen der jeweiligen Berechnung eines Ergebnisdatensatzes und dem tatsächlichen Ende des Zeitabschnitts ändern. Solche Änderungen können beliebige Geschäftsvorgänge sein, die zu einem Konto getätigt wurden. Dabei ist zu berücksichtigen, dass die Zeitspannen zwischen der jeweiligen Berechnung eines Abschlusses bzw. Ergebnisdatensatzes und dem Zeitabschnittsende unterschiedlich sind, da die Ergebnisdatensätze nicht gleichzeitig, sondern nacheinander berechnet werden. Die ermittelte Zeitspanne 10, in der alle Ergebnisdatensätze berechnet werden können, kann damit in kleinere Segmente 10a, 10b, etc. unterteilt werden, für die die Wahrscheinlichkeit einer Änderung der den Berechnungen zu Grunde zu legender Daten zu ermitteln ist.

Die vor dem Zeitabschnittsende berechneten Ergebnisse bleiben solange korrekt, wie die der Berechnung zu Grunde gelegten Daten unverändert bleiben. Daher ist die hier ermittelte Wahrscheinlichkeit einer Änderung der der Berechnung eines Abschlusses zu Grunde liegenden Daten auch diejenige, mit der der berechnete Abschluss am Ende des Zeitabschnitts 9 nicht mehr korrekt ist.

Im dritten Verfahrensschritt werden nun die Ergebnisdatensätze berechnet. In vorteilhafter Weise werden dabei diejenigen zu berechnenden Ergebnisdatensätze zu einer Gruppe zusammengefasst, für die dieselbe oder nahezu dieselbe Änderungswahrscheinlichkeit ermittelt wurde, so dass eine solche Gruppe von Ergebnisdatensätzen in einem Segment und somit in einem Programmlauf, einem so genannten Batchlauf, berechnet werden kann. Die Berechnung der Ergebnisdatensätze beginnt dabei zu Beginn des jeweiligen Segments 10a, 10b, .. der Zeitspanne 10. In der Praxis werden aus Gründen der Praktikabilität nun so viele Gruppen von Ergebnisdatensätzen gebildet, wie die Zeitspanne sinnvollerweise in Segmente unterteilt werden kann, wobei jedes Segment beispielsweise ein Tag sein kann. An jedem Tag 10a, 10b, 10c .. innerhalb der Zeitspanne 10 wird damit eine Gruppe von Ergebnisdatensätzen berechnet. Dabei werden zuerst diejenigen Ergebnisdatensätze berechnet, für deren zu Grunde liegende Daten die kleinste Änderungswahrscheinlichkeit ermittelt wurde und die folglich mit der größten Wahrscheinlichkeit auch noch am Zeitabscnittsende 9 korrekt sind. Diejenigen Ergebnisdatensätze, für deren zu Grunde liegende Daten eine hohe Änderungswahrscheinlichkeit ermittelt wurde, werden entsprechend am Ende der Zeitspanne und damit mit geringem Zeitabstand zu dem Zeitabschnittsende berechnet. Durch diese Reihenfolge bei der Berechnung der Ergebnisdatensätze ist sichergestellt, dass eine möglichst geringe Anzahl der Ergebnisdatensätze auf Grund von Änderungen der zu Grunde liegenden Daten nach ihrer Berechnung und vor dem Zeitabschnittsende nicht mehr korrekt sind.

Während der Berechnung der Ergebnisdatensätze muss weiterhin sichergestellt sein, dass in dieser Zeit die Berechnungsgrundlagen nicht geändert werden. Alle bei der Berechnung zu berücksichtigenden bankintemen Variablen, wie beispielsweise die für die Berechnung von Bankgebühren, dem so genannten Pricing, dürfen damit nach der Berechnung des Abschlusses nicht mehr verändert werden. Ebenso muss gewährleistet sein, dass nicht genau zu dem Zeitpunkt, da zu einem Konto der Ergebnisdatensatz, also der Abschluss, berechnet wird, eine Transaktion verbucht wird. Eine Überschneidung der beiden Berechnungen könnte dazu führen, dass eine Transaktion zu einem Konto im Rahmen der täglichen Verarbeitung von Transaktionsdaten verbucht wird, diese jedoch nicht in die Berechnung des Ergebnisdatensatzes, also des Abschlusses, eingeht.

Im nächsten Verfahrensschritt werden die so berechneten Ergebnisdatensätze an den dafür vorgesehenen endgültigen Positionen gespeichert. Das bedeutet, dass die Ergebnisdatensätze vor dem Zeitabschnittsende auf den Konten verbucht werden. Um zu berücksichtigen, dass die Berechnung des Abschlusses zeitlich vorgezogen wurde, wird zwischen dem Buchungstag und dem Valutatag unterschieden, so dass beispielsweise die für ein Sparguthaben fällig werdenden Zinsen bis zum Ende des Zeitabschnitts berechnet und schon gebucht werden, die Wertstellung (Valuta) jedoch erst am Zeitabschnittsende stattfindet.

In dem letzten Verfahrensschritt wird dann festgestellt, ob die der Berechnung der Ergebnisdatensätze zu Grunde gelegten Daten nach der Berechnung des jeweiligen Ergebnisdatensatzes tatsächlich verändert wurden. Dieser Verfahrensschritt wird typischerweise kurz vor dem Zeitabschnittsende durchgeführt und idealerweise dann, wenn alle Transaktionen des letzten Tages vor dem Zeitabschnittsende verbucht wurden, so dass eine weitere Änderung der Daten ausgeschlossen ist.

Die Feststellung, ob die der Berechnung eines Ergebnisdatensatzes zu Grunde gelegten Daten nach dem Zeitpunkt der Berechnung verändert wurden, ist prinzipiell für jeden Ergebnisdatensatz durchzuführen. Das Verfahren kann nun vorteilhaft so ausgestaltet sein, dass alle Transaktionen, die zu einem Konto nach dem Zeitpunkt der vorgezogenen Berechnung des Ergebnisdatensatzes verbucht werden, zusätzlich zu der Verbuchung auf dem Konto in eine Tabelle geschrieben werden. Am letzten Tag des ablaufenden Zeitabschnitts und nachdem alle Transaktionen dieses Tages zu den entsprechenden Konten verbucht wurde enthält die Tabelle somit alle Transaktionen, die die den Berechnungen zu Grunde gelegten Daten verändert haben. Eine Möglichkeit dies zu realisieren besteht beispielsweise darin, die Softwaremodule, welche die Transaktionen zu dem jeweiligen Konto verbuchen, entsprechend zu ändern, so dass diese die für eine Korrektur des bereits errechneten Abschlusses notwendigen Daten in die Tabelle schreiben. Alternativ dazu könnte diese Funktionalität auch durch einen sogenannten Datenbanktrigger erfolgen, der so eingerichtet werden kann, dass er bei bestimmten Aktionen in einer Datenbanktabelle selbst bestimmte Aktionen durchführen kann. In dem letzten Verfahrensschritt wäre dann anhand dieser Tabelle einfacher feststellbar, zu welchen Kontoabschlüssen eine Korrektur erfolgen muss, also welche Ergebnisdatensätze neu zu berechnen bzw. zu korrigieren wären. In dem Beispielsfall der Großbank erfolgt die tatsächliche Prüfung nach einer dritten Variante. Nachdem am letzten Tag des ablaufenden Zeitabschnitts alle Ergebnisdatensätze berechnet und alle Transaktionen dieses Tages verarbeitet wurde, also die Tagesendverarbeitung beendet wurde, wird ein Softwaremodul gestartet, welches die Prüfung durchführt und eine Neuberechnung eines Ergebnisdatensatzes anstößt, wenn die Prüfung eine Änderung der der Berechnung des Ergebnisdatensatzes ergibt. Das Softwaremodul prüft für jedes Konto anhand einer Tabelle, in der alle Transaktionen gespeichert werden, ob für das jeweilige Konto Transaktionen gebucht wurden, nachdem der jeweils zugehörige erste Ergebnisdatensatz berechnet wurde. Die Tabelle enthält dabei mindestens alle Transaktionen des ablaufenden Zeitabschnitts, wird also nicht nur während der Zeitspanne der Berechnung der Ergebnisdatensätze geführt.

Falls für einen Ergebnisdatensatz festgestellt wird, dass dieser auf Grund einer Veränderung der der Berechnung zu Grunde liegenden Daten nicht mehr korrekt ist, so wird eine Korrektur berechnet, in der die Veränderungen der Daten berücksichtigt sind. Eine solche Korrektur eines Ergebnisdatensatzes kann dabei in vorteilhafter Weise so ausgestaltet sein, dass zunächst der nun nicht mehr gültige . Ergebnisdatensatz storniert wird, also als ungültig markiert wird. Anschließend wird ein neuer Ergebnisdatensatz auf der Grundlage aller Daten des Zeitabschnitts berechnet. Dies hat den Vorteil, dass der stornierte und als ungültig markierte Ergebnisdatensatz nicht an den Kontoinhaber weitergegeben werden muss, da der neu berechnete Ergebnisdatensatz in sich schlüssig und somit ohne den vorhergehenden Ergebnisdatensatz verständlich ist.

In dem Beispielsfall der Großbank ist im Falle einer solchen Korrektur eines Ergebnisdatensatzes tatsächlich auch nur der später berechnete und damit korrekte Ergebnisdatensatz dem Kontoinhaber sichtbar. Der stornierte Ergebnisdatensatz wird nicht aus dem Konto gelöscht, jedoch wird er als ungültig markiert und erhält damit eine Markierung mit der Bedeutung, dass dieser Ergebnisdatensatz nicht dem Kontoinhaber angezeigt werden darf. Applikationen, über die der Kontoinhaber die Buchungen auf seinem Konto sehen kann, beispielsweise ein einen Kontoauszugsdrucker bedienendes Softwaremodul oder ein Internetserver, über den der Kontoinhaber per Telebanking auf sein Konto zugreift, können anhand dieser Markierung erkennen, dass der Ergebnisdatensatz nicht anzuzeigen ist.

Das vorgeschlagene Datenverarbeitungsverfahren ermöglicht damit das zeitliche Vorziehen der Berechnung der Ergebnisdatensätze, wobei sichergestellt ist, dass alle bis zum Ende des Zeitabschnitts noch stattfindenden Transaktionen berücksichtigt sind. Dabei ist durch die Ermittlung der Wahrscheinlichkeit einer Änderung der den Berechnungen zu Grunde liegenden Daten eine Optimierung der Reihenfolge der Berechnungen möglich, so dass möglichst wenige Ergebnisdatensätze korrigiert werden müssen. Gleichzeitig wird damit erreicht, dass die Ergebnisdatensätze zeitnah an dem tatsächlichen Zeitabschnittsende berechnet werden, wobei die dabei entstehende Rechenlast für das Computersystem minimiert und eine unökonomische Vorhaltung an Rechenleistung vermieden wird.

## Patentansprüche

1. Datenverarbeitungsverfahren zur zeitlich optimierten Berechnung einer großen Anzahl von Ergebnisdatensätzen an einem Zeitabschnittsende, wobei der Berechnung Daten zu Grunde gelegt werden, die vor dem Zeitabschnittsende veränderbar sind und wobei das Datenverarbeitungsverfahren mindestens folgende Schritte aufweist:
(1) Festlegen einer Zeitspanne, für die die zu Grunde gelegten Daten berücksichtigt werden sollen,
(2) Ermitteln der Wahrscheinlichkeit für jeden Ergebnisdatensatz, dass die der Berechnung des jeweiligen Ergebnisdatensatzes zu Grunde gelegten Daten in der Zeit zwischen der Berechnung des Ergebnisdatensatzes und dem Zeitabschnittsende verändert werden,
(3) Berechnen der Ergebnisdatensätze innerhalb der Zeitspanne, wobei diejenigen Ergebnisdatensätze, bei denen die der Berechnung zu Grunde liegenden Daten eine geringere Wahrscheinlichkeit einer Änderung aufweisen, zeitlich vor denjenigen Ergebnisdatensätzen berechnet werden, bei denen die der Berechnung zu Grunde liegenden Daten eine höhere Wahrscheinlichkeit einer Änderung aufweisen,
(4) Speichern der Ergebnisdatensätze,
(5) Feststellen für jeden Ergebnisdatensatz kurz vor dem Zeitabschnittsende, ob die der Berechnung des Ergebnisdatensatzes zu Grunde liegenden Daten nach der Berechnung des Ergebnisdatensatzes verändert wurden, und gegebenenfalls Berechnung einer Korrektur, insbesondere Durchführen einer Neuberechnung, für den jeweiligen Ergebnisdatensatz.

2. Datenverarbeitungsverfahren nach Anspruch 1, bei dem die der Berechnung zu Grunde gelegten Daten in Gruppen zusammengefasst werden, wobei für eine Gruppe von Daten im Voraus, insbesondere im Voraus für mehrere Zeitspannen, die im Wesentlichen gleiche Wahrscheinlichkeit einer Änderung ermittelt wurde.

3. Datenverarbeitungsverfahren nach einem der vorstehenden Ansprüche, **dadurch gekennzeichnet, dass** die Wahrscheinlichkeit einer Veränderung der der Berechnung eines Ergebnisdatensatzes zu Grunde liegenden Daten auf Grund statistischer Werte ermittelt wird.

4. Datenverarbeitungsverfahren nach einem der vorstehenden Ansprüche, wobei die Korrektur, insbesondere die Neuberechnung eines Ergebnisdatensatzes nach außen nicht sichtbar ist.

5. Datenverarbeitungsverfahren nach einem der vorstehenden Ansprüche, **dadurch gekennzeichnet, dass** die Ergebnisdatensätze Abschluss- und/oder Gebühren-Buchungen an einem Zeitabschnittsende sind.

6. Datenverarbeitungsverfahren nach einem der vorstehenden Ansprüche, **dadurch gekennzeichnet, dass** diejenigen der Berechnung eines Ergebnisdatensatzes zu Grunde gelegten Daten gekennzeichnet werden, die nach der Berechnung der jeweiligen Ergebnisdatensätze verändert wurden.

7. Datenverarbeitungsverfahren nach einem der vorstehenden Ansprüche, **dadurch gekennzeichnet, dass** nach der Berechnung eines Ergebnisdatensatzes neu hinzukommende, bei der Korrektur, insbesondere der Neuberechnung des Ergebnisdatensatzes zu berücksichtigende Daten gekennzeichnet werden.

8. Datenverarbeitungsverfahren nach einem der vorstehenden Ansprüche, **dadurch gekennzeichnet, dass** es sich bei den Datenverarbeitungen um bankfachliche Berechnungen und Buchungen handelt.

9. Datenverarbeitungsverfahren nach einem der vorhergehenden Ansprüche, **dadurch gekennzeichnet, dass** die Ergebnisdatensätze bei der Berechnung mit dem Zeitstempel der Berechnung gekennzeichnet werden.

10. Computer-Programm mit Programm-Code-Mitteln zum Durchführen der in einem der vorhergehenden Ansprüche angegebenen Verfahrensschritte, wenn das Programm auf einem Computer ausgeführt wird.

11. Computer-Programm mit Programm-Code-Mitteln nach Anspruch 10, welches auf einem computerlesbaren Speichermedium gespeichert ist.
